# EUROPÄISCHE PATENTSCHRIFT

(11) **EP 3 015 847 B1**
(45) Veröffentlichungstag und Bekanntmachung des Hinweises auf die Patenterteilung: **03.05.2017**
(21) Anmeldenummer: 15191056.9
(22) Anmeldetag: 22.10.2015
(51) Int. Cl.: G01N 9/00

(54) **VERFAHREN UND MESSGERÄT ZUR DICHTEMESSUNG VON FLUIDEN MEDIEN**
METHOD AND MEASURING DEVICE FOR MEASURING THE DENSITY OF FLUID MEDIA
PROCEDE ET APPAREIL DE MESURE DESTINES A MESURE LA DENSITE DE MILIEUX LIQUIDES

(30) Priorität: 31.10.2014 AT 507872014
(43) Veröffentlichungstag der Anmeldung: 04.05.2016
(73) Patentinhaber: Anton Paar GmbH, 8054 Graz-Straßgang (AT)
(72) Erfinder: Scheibelmasser, Anton, 8054 Graz (AT); Ganser, Julia, 8052 Graz (AT); Umfer, Christof, 8041 Graz (AT); Krenn, Manfred, 8081 Pirching (AT)
(74) Vertreter: Wildhack & Jellinek

(56) Entgegenhaltungen:
- US-A- 4 074 562
- "Densito - das kompakte Multitalent in Sachen Dichtemessung", , 30. Mai 2006 (2006-05-30), XP055258054, Gefunden im Internet: URL:http://de.mt.com/dam/Analytical/Densit y/DE-PDF/30245924_V12.14_Densito30PX_de.pd f [gefunden am 2016-03-14]

## Beschreibung

Die Erfindung betrifft ein Verfahren gemäß dem Oberbegriff des Patentanspruches 1 sowie ein Messgerät gemäß dem Oberbegriff des Patentanspruchs 7 sowie eine Kartusche für ein Messgerät.

Die Dichtemessung mit einem Biegeschwinger beruht auf der Tatsache, dass sich die Eigenschwingungen eines mit fluiden Medien gefüllten U-Rohres mit der Masse und bei konstantem Volumen mit der Dichte des Füllmediums ändern und über eine Messung von das Schwingungssystem charakterisierenden Parametern, z.B. Periodendauer bzw. Frequenz und/oder Amplitude und/oder Dämpfung, Güte, Verlustwinkel und/oder Oberwellen, einer Eigenschwingung, nach Anregung mit geeigneten Frequenzen und Ermittlung der Antwort des Systems, beispielsweise mittels Phasenlage und/oder Amplitude der erregten Schwingung, die Dichte und/oder die Konzentration von binären Mischungen bestimmt werden kann. Zur Auffindung der Resonanzen werden beispielsweise Erregerverstärker eingesetzt, welche mittels Prinzip der Mitkopplung bzw. Entdämpfung den Schwinger zu einer ungedämpften Schwingung in der Resonanzlage verhelfen.Die Patentschrift US 4074562 offenbart eine Dichtemessvorrichtung mit Biegeschwinger aus dem Stand der Technik. Labormessgeräte sind dabei zumeist mit einem U-förmigen Rohr als Biegeschwinger, gegebenenfalls mit einem zusätzlichen Referenzschwinger, ausgeführt. Dabei muss der Schwinger mit einer ausreichend großen Gegenmasse ausgestattet sein, um genaue und stabile Messergebnisse zu erhalten, da die Messung von einem konstanten Volumen im schwingenden System ausgeht. Dies bedingt, dass der Schwingungsknoten an der Einspannstelle sich nicht verändert. Dies ist theoretisch aber nur mit einer unendlich hohen Gegenmasse möglich.

Tragbare Dichtemessgeräte können durch Biegeschwinger mit Massenausgleich realisiert werden. Diese können als sogenannte Doppelbugschwinger ausgeführt sein, die zwei durch ein gebogenes Verbindungsstück verbundene Biegeschwinger aufweisen, die gegeneinander schwingen. Alternativ können sogenannte X-Schwinger Verwendung finden, bei denen die beiden Schenkel eines U-Rohres in der durch sie gebildeten Ebene gegeneinander schwingen. Die beiden Schenkel des schwingenden Gebildes schwingen also in Gegenphase, dass ein Massenausgleich stattfindet du keine Gegenmasse erforderlich ist.

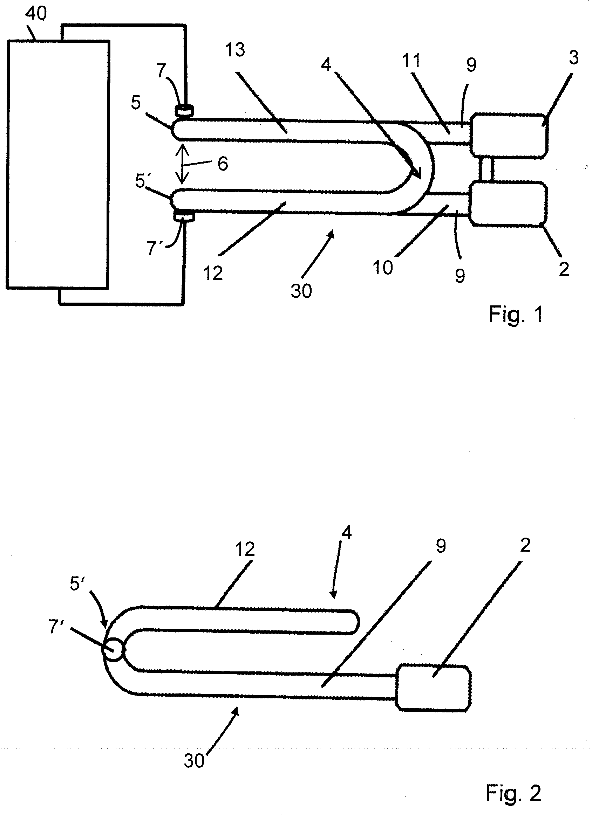

Die Figur 1 und 2 zeigen einen derartigen Biegeschwinger mit Massenausgleich, hier ein Doppelbugschwinger, bei dem die beiden U-förmig gebogenen Teilabschnitte gegeneinander schwingen.

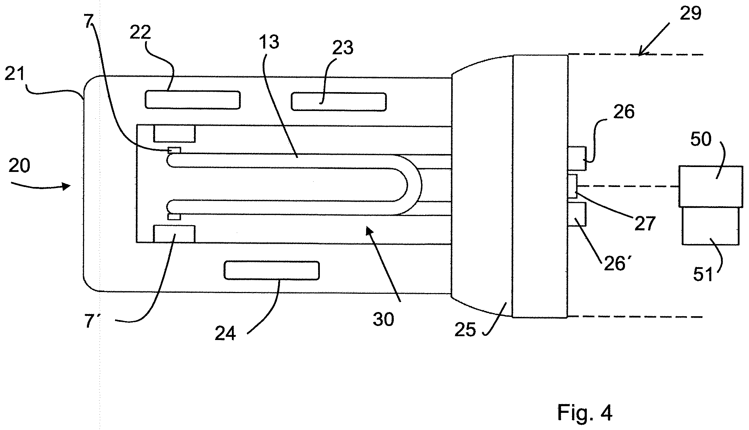

Fig. 1 zeigt das Grundprinzip eines erfindungsgemäßen Biegeschwinger mit Massenausgleichs, wobei allerdings allenfalls eingesetzte Dämpfungselemente nicht dargestellt sind. Der Doppelbug-Biegeschwinger umfasst ein in einem Bereich 4 U-förmig abgebogenes Schwingerrohr 9, dessen Enden bzw. Schenkel 10, 11 mit jeweils einem Endanschluss 2, 3 verbunden sind. Für die Durchführung einer Dichtemessung wird das Rohr 9 über die Endanschlüsse bzw. Träger 2, 3 mit Fluid durchströmt. In Biegebereichen 5, 5' ist der Längsmittenbereich des Rohres 9 mit der Basis 4 in Richtung auf die Endanschlüsse 2, 3 ab- bzw. zurückgebogen uns bildet weitere Schenkel 12, 13 aus, wie dies aus Fig. 2 ersichtlich ist. In zumindest einem der Biegebereiche 5 ist ein Schwingungserreger 7 und im jeweils gegenüberliegenden Biegebereich 5' ist eine Messeinheit 7' für zumindest einen Schwingungsparameter, vorzugsweise die Schwingungsamplitude, vorgesehen. In der Praxis werden somit ein oder zwei Schwingungserreger 7 und ein oder zwei Messeinheiten 7' vorgesehen. Mit dem Schwingungserreger 7 werden das Rohr 9 bzw. die Biegebereiche 5, 5' in Schwingung versetzt, wobei die Biegebereiche 5, 5' aufeinander zu bzw. voneinander weg schwingen, wie dies mit dem Pfeil 6 dargestellt ist. Die Abnahme der Schwingung erfolgt mit einer als Schwingungsdetektor ausgebildeten Messeinheit 7'. Die Schwingungsanregung und die Abnahme der Schwingungsparameter erfolgt vorteilhafterweise elektromagnetisch gesteuert bzw. überwacht mit einer Mess- bzw. Sensorelektronik 23 bzw. mit einer in Fig. 4 dargestellten Steuereinheit 51, die insbesondere mit dem Schwingungserreger 7 bzw. mit dem Schwingungsdetektor 7' verbunden ist.

Die Einspannstelle des Schwingerrohrs ist dabei immer als sogenannter Schwingungsknoten des schwingenden Systems zu betrachten, eine Befüllung des Schwingerrohrs über diesen Halte- und Einspannpunkt hinaus spielt bei der Schwingung keine Rolle und trägt zur Messung nicht bei.

Als Materialien sind für derartige Schwinger bzw. Schwingrohre 10, 11, 12, 13 sowohl Metalle als auch Glas einsetzbar. Neben der Materialwahl bestimmen die Abmessungen des Schwingerrohrs den Messbereich durch die Eigenfrequenzen des Schwingers und die erreichbare Genauigkeit der Messung. Die Auswahl des Materials ist auch von den zu messenden Fluiden abhängig, beispielsweise kann Flusssäure nicht mit Glasschwingern verwendet werden, während die für die Batteriemessung relevanten Schwefelsäure nicht mit Metallschwingern untersucht werden kann.

Bei der Dichtemessung kann gewünscht sein, giftige und/oder radioaktive Substanzen zu vermessen, deren Auswaschung und/oder Verdünnung mit einem Lösungsmittel bei der Reinigung des Schwingers zu Problemen führen kann. Auch die Messung medizinischer Proben kann eine strikte Trennung bei der Untersuchung verlangen, um hier eine Verschleppung von Substanz zwischen unterschiedlichen Proben sicherzustellen. In einzelnen speziellen Messanwendungen ist daher die Verwendung von einfach tauschbaren Messzellen gewünscht.

Die Programme von Handheldgeräten sind dabei möglichst einfach hinsichtlich Bedienbarkeit ausgeführt und nicht auf die erneute Eingabe von Justierdaten ausgerichtet. Die Auslieferung erfolgt im Regelfall nach einer werksseitigen Justierung des Messgeräts. Die Qualität des Messgeräts wird durch sogenannte Einpunktkalibrierungen, z.B. mittels Wasserpunkt, überprüft.

Dabei kann der Schwinger durch die Einsatzbedingungen außerhalb eines Labors durch sowohl Umwelteinflüsse und Umgebungsbedingungen, z.B. Frost oder zu hohe Temperaturen, oder die Handhabung beeinträchtigt werden. Der Schwinger kann dabei Alterungsbedingungen unterliegen, die eine Neujustierung des Schwingers nötig machen würden, um die Genauigkeit des Schwingers zu gewährleisten.

Glasschwinger sind bruchanfällig. Durch harte Stöße, ungewolltes Hinunterfallen oder hohe Temperaturschwankungen, z.B. bei Befüllen des gekühlten Schwingers mit heißen Flüssigkeiten können die Schwingerrohre brechen bzw. sich die mechanischen Eigenschaften ändern. Damit wird das gesamte Gerät nicht mehr verwendbar.

Ein Schwingertausch beispielsweise nach Bruch ist in der Regel eine aufwändige Prozedur, speziell müssen nach dem Tausch die Justierparameter des Messgeräts neu bestimmt und hinterlegt werden.

Justiermessungen nach einem Tausch des Schwingerrohrs sind nur sehr schwer durchführbar. Dies liegt z.B. daran, dass für die Justierung zumindest die Messpunkte Luft, Wasser plus zumindest ein Justierstandard zur Verfügung stehen müssen. Aufgrund der leichten und tragbaren Ausführung sind derartige Geräte nicht mit aufwändigen Füllsystemen zum Reinigen und Trocknen des Schwingers ausgeführt, die beispielsweise durch Spülen mit Lösungsmitteln und die nachfolgende Trocknung z.B. durch Pressluft. Besonders bei Labormessgeräten mit der Möglichkeit der Temperierung der Proben kann es gewünscht sein, die Dichte von Proben über längere Zeit oder bestimmte Temperaturbereiche hin zu messen, in denen sich die Probeneigenschaften ändern. Dies kann, z. B. durch Aushärten des Mediums, dazu führen, dass die Messzelle bzw. das Schwingrohr nicht mehr gereinigt werden kann. Als Beispiel dazu wären Kleber, Lacke, Polymere zu erwähnen, d.h. alle Medien, die eine Entleerung der Zelle nicht mehr erlauben. Auch Medien, die das Glas nachhaltig undurchsichtig machen bzw. die Eigenschaften des Glases verändern bzw. dessen Oberfläche und/oder Struktur beeinflussen, müssen untersucht werden können.

Der Erfindung liegt damit die Aufgabe zugrunde, ein Messsystem zu erstellen, das diese Nachteile vermeidet, konstruktiv einfach aufgebaut ist und präzise Messungen ermöglicht. Erfindungsgemäß wird dies bei einem Messgerät der eingangs genannten Art mit den im Kennzeichen des Anspruchs 1 angeführten Merkmalen erreicht. Erfindungsgemäß ist somit vorgesehen,
- dass als Dichtesensor ein Biegeschwinger mit Massenausgleich eingesetzt wird und dass alle für das Schwingungsverhalten, die Schwingungserregung und Schwingungsauswertung relevanten Bauteile des Biegeschwingers mit Massenausgleich sowie die dem Biegeschwinger mit Massenausgleich direkt zugeordnete Mess- und Sensorelektronik mit einer Kartusche umschlossen werden und/oder diese Bauteile mit dem Biegeschwinger mit Massenausgleich in die Kartusche eingesetzt werden,
- dass der Biegeschwinger mit Massenausgleich samt Kartusche unter Einsatz von Messstandards justiert oder kalibriert und gegebenenfalls an den jeweiligen Einsatzzweck angepasst wird, und
- dass die Kartusche mit dem Biegeschwinger mit Massenausgleich vor Beginn des Messeinsatzes zur Untersuchung von Medien mit dem Messgerät oder einem Grundkörper des Messgerätes lösbar oder auswechselbar verbunden wird. Ein erfindungsgemäßes Messgerät ist dadurch gekennzeichnet,
- dass der Biegeschwinger mit Massenausgleich sowie dessen Mess- und Sensorelektronik in eine Kartusche eingesetzt und von dieser umschlossen sind,
- dass die Kartusche mit dem Messgerät über der Kartusche und dem Messgerät ausgebildete Verbindungsbauteile lösbar verbindbar oder verbunden ist, und
- dass von der Kartusche zumindest ein Speichermedium umschlossen oder dieses in der Kartusche angeordnet ist, auf dem Justier- bzw. Kalibrierdaten des Biegeschwingers, die für den Biegeschwinger unter Einsatz von Messstandards ermittelt wurden, abgespeichert vorliegen.
Eine mit einem derartigen Messgerät verbindbare bzw. in dieses einsetzbare Kartusche ist dadurch gekennzeichnet, dass in der Kartusche ein Biegeschwinger mit Massenausgleich sowie dessen Mess- und Sensorelektronik und zumindest ein Speichermedium angeordnet bzw. von dieser Kartusche bzw. deren Gehäuse gänzlich umschlossen ist.

Für die Austauschbarkeit der Kartusche ist es vorteilhaft, wenn die Justier- oder Kalibrierdaten auf ein in oder an der Kartusche befindliches Speichermedium abgespeichert und dort elektronisch lesbar zur Verfügung gehalten werden und/oder im Zuge der Messung die Messdaten und die Justier- oder Kalibrierdaten von dem in der Kartusche befindlichen Biegeschwinger mit Massenausgleich oder der diesem zugeordneten Mess- und Sensorelektronik an eine im Messgerät befindliche Auswerteeinheit übertragen werden.

Zweckmäßig ist es, wenn im Zuge der Messung von der Mess- und Sensorelektronik Steuersignale für die Phasenlage der Anregung des Schwingerrohrs des Biegeschwingers mit Massenausgleich an die in der Kartusche oder im Messgerät befindliche Steuereinheit für die in der Kartusche befindlichen Bauteile übertragen werden und/oder wenn aus dem Abnahmesignal des Biegeschwingers mit Massenausgleich generierte, elektrische, periodische Signale als charakteristische Signale für die Dichteauswertung von der in der Kartusche befindlichen Mess- und Sensorelektronik an das Messgerät und/oder die Messwerteinheit übertragen werden und/oder wenn Temperaturmesssignale betreffend die Umgebungstemperatur und/oder die Temperatur des Schwingerrohrs zur Kompensation der Temperatur der Dichtemessung und/oder zur Temperaturangleichung und/oder deren Vorausberechnung von der in der Kartusche befindlichen Mess- und Sensorelektronik an das Messgerät und/oder die Messwerteinheit übertragen werden.

Es ist praktisch, wenn die Kartusche einen Verbindungsteil trägt, dem am Messgerät ein Gegenstück zugeordnet ist, mit denen die Kartusche und das Messgerät lösbar miteinander verbunden sind, und/oder wenn an der Kartusche des Biegeschwingers mit Massenausgleich und an dem Messgerät miteinander verbindbare Steck-, Schraub-, Klemm- oder Bajonettverschlüsse ausgebildet sind.

Für die Auswertung bzw. den Aufbau des Messgerätes ist es von Vorteil, wenn in der Kartusche der Erregerverstärker sowie die Schwingungserreger und die Sensoren für die Abnahme der Schwingungsparameter, z.B. Magnete, Piezoelemente, elektrische Elemente, Temperatursensoren, Anregungseinheiten für den Anregewinkel und/oder Beleuchtungseinheiten zur optischen Kontrolle der Schwingungsrohrbefüllung, angeordnet sind, wobei diese Bauteile gegebenenfalls auf zumindest einer Leiterplatte angeordnet sind, die mit dem Biegeschwinger mit Massenausgleich gemeinsam in der Kartusche aufgenommen sind und/oder das Messgerät die Steuer- und Auswerteelektronik, eine Tastatur, einen Bildschirm, die Spannungs- bzw. Stromversorgung und/oder Füllhilfen, beispielsweise in Form einer Spritze oder Pumpe oder eines Probensamplers umfasst und gegebenenfalls Speichermedien zur Aufzeichnung und zur Ausbildung von Schnittstellen und Ausgabeeinheiten für die Messdaten enthält und/oder in die Kartusche zusätzlich zum Erregerverstärker die Auswerteeinheit, vorteilhafterweise in Form eines Microcontrollers, mit einer drahtgebundenen oder drahtlosen Schnittstelle integriert ist und/oder am Messgerät ein Ausgangsrohr bzw. Anschlussrohr für die Zuleitung bzw. Ableitung eines Mediums zum bzw. vom Biegeschwinger mit Massenausgleich ausgebildet ist, wobei an der Kartusche angepasste Rohrstücke bzw. Aufnahmen zur mediumsdichten Verbindung der Kartusche mit dem Messgerät ausgebildet sind.

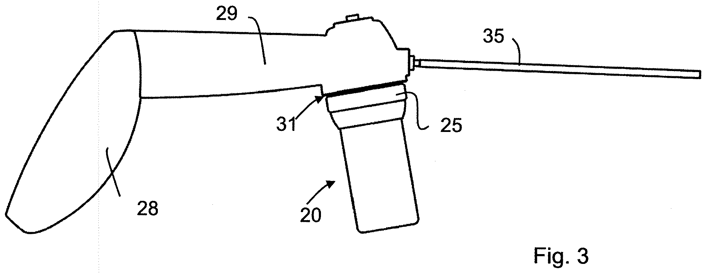

In den Fig. 3 und 4 wird ein erfindungsgemäßes Messgerät mit Kartusche näher erläutert.

Der im erfindungsgemäßen Messgerät eingesetzte Biegeschwinger mit Massenausgleich 30 wurde bereits anhand der Fig. 1 und 2 erläutert. Ein derartiger Biegeschwinger mit Massenausgleich 30 wird beim erfindungsgemäßen Messgerät eingesetzt bzw. ist ein Teil desselben. Der Biegeschwinger mit Massenausgleich 30 wird in ein Gehäuse 21 eingesetzt, welches Gehäuse 21 die Form einer Kartusche 20 aufweist; diese Kartusche 20 nimmt den Biegeschwinger mit Massenausgleich 30 auf. Des Weiteren ist in dieser Kartusche 20 die Mess- und Sensorelektronik 23 angeordnet, welche die Schwingungsparameter des Biegeschwinger mit Massenausgleichs 30 aufnimmt und/oder weiterleitet und/oder auswertet. Ferner ist in der Kartusche 20 eine Speichereinheit 22 angeordnet, in welcher vor Beginn des Messeinsatzes Daten abgespeichert werden, welche Daten unter Einsatz von Dichte-Messstandards für den Biegeschwinger mit Massenausgleich 30 erhalten wurden. Alternativ könnte hier auch ein anderer Biegeschwinger mit Masseausgleich Verwendung finden.

Das erfindungsgemäße Messgerät ist in Fig. 3 in seiner Gesamtheit näher dargestellt. Dieses Messgerät weist einen Endteil 28 auf, in dem Anzeigen, Einstellmöglichkeiten und/oder die Mess- bzw. Auswerteeinheit 50 angeordnet sein können, mit der die von der Mess- und Sensorelektronik 23 ermittelten Daten ausgewertet werden. Prinzipiell wäre es auch möglich, die Mess- bzw. Auswerteeinheit 50 in der Kartusche 20 anzuordnen. Diese Mess- bzw. Auswerteeinheit 50 kann auch die Schwingbewegung des Biegeschwinger mit Massenausgleichs 30 steuern. Es kann dies aber auch mit einer eigenen Steuereinheit 51 erfolgen.

Die Kartusche 20 besitzt Verbindungselemente bzw. einen Anschluss 25, mit dem die Kartusche 20 mit einem Grundkörper 29 des Messgeräts verbindbar ist, der mit dem Endteil 28 verbunden ist. Dazu können an dem Grundkörper 29 und/oder an der Kartusche 20 entsprechend aneinander angepasste Verbindungsteile ausgebildet sein, die in Fig. 3 mit 31 bezeichnet sind.

Die Leitung des Messfluids durch das Schwingerrohr 10, 11, 12, 13 erfolgt über einen Anschluss 26 bzw. einen Auslass 26', welcher Einlass und welcher Auslass vorzugsweise direkt mit dem Schwingerrohr 10, 11, 12, 13 kommunizieren. Für die Übertragung der elektrischen Signale ist ein entsprechender Kontakt 27 vorgesehen, an den die Auswerteeinheit 50 angeschlossen ist. Die Steuereinheit 51 zur Einstellung der Schwingungsparameter des Biegeschwinger mit Massenausgleich Biegeschwingers mit Massenausgleich 30 ist in dem Messgerät 28 und/oder im Grundkörper 29 vorgesehen.

Es kann auch am Grundkörper 29 ein Rohr 35 angeschlossen sein, mit dem zu untersuchendes Medium zum Einlass 26 der Kartusche 20 geleitet werden kann. Mit entsprechenden, nicht dargestellten Saug- oder Pumpeinrichtungen kann durch dieses Rohr 35 Medium angesaugt und durch den Biegeschwinger mit Massenausgleich 30 zur Vermessung durchgeleitet werden.

Es können alle für das Schwingerverhalten relevanten Teile der Mess- und Auswerteelektronik gemeinsam mit dem Schwingerrohr in einer/einem leicht wechselbaren, mechanisch beständigen, teilweise durchsichtigen, thermisch isolierenden, flüssigkeitsdichte, probenbeständige Umhüllung bzw. einer Kartusche zusammengefasst und mit einer lösbaren Verbindung elektrisch, mechanisch und fluidmäßig an das Messgerät bzw. dessen Gehäuse angekoppelt werden.

Die Bauteile, die von der Kartusche aufgenommen werden, sind die maßgebliche Elektronik, umfassend Erregerverstärker, Erreger und Sensor für die Schwingung, beispielsweise Magnete, Piezos, Temperatursensoren und/oder auch Aktuatoren, z.B. für die Umschaltung des Anregewinkels sowie die Hintergrundbeleuchtung zur optischen Kontrolle der Zellbefüllung. Bevorzugt werden diese Bauteile auf zumindest einer Leiterplatte verbaut und mit dem Biegeschwinger gemeinsam in dem Gehäuse bzw. in der Kartusche eingebaut.

Diese Kartusche kann werksseitig für das jeweilige Messgerät durch Messungen an Messstandards justiert werden und die Justierdaten werden elektronisch lesbar mit der Kartusche zur Verfügung gestellt. Die Kartusche kann somit als eingeständiger Teil zur Verfügung gestellt bzw. auf Vorrat gehalten werden.

Das gegebenenfalls einen Handgriff aufweisende Messgerät enthält in seinem Gehäuse die Steuer- und Auswertelektronik, z.B. einem µ-Controller oder Computer, sowie Tastatur, Bildschirm, Spannungs-/Stromversorgung samt Netzteil, Batterie, Akku, und Füllhilfen, z.B. Spritze, Pumpe oder Probensampler, und gegebenenfalls Speichermedien zur Aufzeichnung von Daten und Schnittstellen zur Ausgabe der Messdaten. Das Messgerät kann mit unterschiedlichen Kartuschen bestückt werden. Das Messgerät liest für jede der eingesetzten Kartuschen die in der jeweiligen Kartusche abgespeicherten Justierkonstanten von der Kartusche aus, um den Messwert, z.B. Dichte, mit Hilfe der Justierkonstanten, die gespeichert in der Kartusche vorliegen, zu berechnen.

Der Schwingertausch sehr kann einfach vom Anwender durchgeführt werden.

Die flüssigdichte und/oder stoßgedämpfte und/oder thermoisolierte Kartusche kann mit einem Stecker zur elektrischen bzw. elektronischen Kopplung und Tüllen bzw. Leitungen und Anschlussöffnungen bzw. Augnahmen zur fluiden Kopplung , sowie mechanischen Fixierungenm, z.B. Verschraubung und/oder Klemmung, mit dem Messgerät verbunden werden.

Zwischen der Kartusche und dem Messgerät werden zumindest folgende elektrische Verbindungen hergestellt: Zwischen dem Messgerät und der Kartusche werden elektrische Verbindungen zur Erreger- und Abnahmespule bzw. Erreger- und Abnahme-Piezos hergestellt. Es wird ferner ein Steuersignal für die Phasenlage der Anregung des Schwingers an die Kartusche übergeben. Es wird ein Steuersignal zum Ein-Ausschalten der Hintergrundbeleuchtung des Schwingers an die Kartusche übergeben. Es wird ein, aus dem Abnahmesignal des Schwingers generiertes elektrisches periodisches Signal, als charakteristisches Signal für die Dichteauswertung von der Kartusche an das Messgerät übergeben. Es wird zumindest ein, bevorzugt werden aber zwei Temperaturmesssignale, z.B. betreffend Umgebung und/oder Schwingertemperatur, notwendig zur Temperaturkompensation der Dichtemessung bzw. zur Temperaturangleichsvorausberechnung, von der Kartusche an das Messgerät übergeben.

Die Spannungs- und/oder Stromversorgung der Kartusche erfolgt vom Messgerät aus.

Es kann ein 1-wire Bussignal zur Übermittlung der Justierkonstanten von der Kartusche an das Messgerät übertragen werden. Auch das Abspeichern von Werten aus dem Messgerät auf dem Datenspeicher der Kartusche, wie z.B. schwingerrelevanter Daten bzw. max. Beschleunigung im Betrieb sowie Qualitätschecks, beispielsweise Water Check, ist möglich.

Damit kann insbesondere bei Handheldgeräten ein einfacher Feldtausch defekter Biegeschwinger sichergestellt werden, ohne neu justieren zu müssen. Vorhandene Kartuschen können nach Alterung durch werksseitige Neujustierung weiter verwendet werden. Die Kontaminierung des Messgerätes mit Probenflüssigkeit kann verhindert werden. Nach einem Bruch können defekte Messgeräte durch Kartuschentausch einfach repariert werden. Das Service des Geräts wird vereinfacht bzw. wird auch im Feld ermöglicht. Es kann ein Set leicht zu tauschender, für verschiedene Proben geeigneter Kartuschen mit Biegeschwinger mit MassenausgleichBiegeschwinger mit Massenausgleich bereitgestellt werden. Der Biegeschwinger kann vor Umgebungseinflüssen geschützt werden. Die gesamte Kartusche kann in das zu untersuchende Medium getaucht werden, um eine optimierte Temperierung zu erzeugen.

In einer besonderen Ausführungsform wird zusätzlich zum Erregerverstärker eine Auswerteeinheit, z.B. Microcontroller, samt drahtgebundener oder drahtloser Schnittstelle, z.B. RS232, USB, Bluetooth und/oder WLAN, in der Kartusche integriert. Damit ist es möglich, mit der Kartusche ein einfaches Dichtemessgerät, in Form eines Moduls oder Smart Sensors, ohne lokale Bedienung bzw. Tastatur und Visualisierung bzw. Display zu erstellen. Die Visualisierung bzw. Bedienung erfolgt dabei mittels eines PCs, Tablett-PCs oder Mobile Phones mittel PC Programm oder App. Die Energieversorgung eines solchen Moduls kann entweder direkt aus der Kommunikationsschnittstelle erfolgen, z.B. USB, CAN, oder durch eine Batterieversorgung implementiert werden. Auch eine Kombination aus Versorgung aus der drahtgebundenen Schnittstelle, z.B. USB, und drahtloser Kommunikation, z.B. Bluetooth, ist denkbar.

Zu bevorzugter Ausführungsform kann die Kartusche bzw. ihr Gehäuse mit einem Verbindungsteil, insbesondere mit einem Schraubverschluss, mit dem Gehäuse des Messgeräts oder einem Zusatzgehäuse bzw. -abteil des Messgeräts verbunden bzw. verschraubt werden. Ein vorgesehenes Zusatzgehäuse kann als Batteriefach bzw. als Träger für Kommunikationsanschlüsse, z.B. USB, CAN Stecker/Buchsen, oder im Falle einer drahtlosen Schnittstelle als Träger der Antennen fungieren. Alternativ wäre es auch möglich, die Auswerteeinheit nicht im Gehäuse, sondern in einem Zusatzgehäuse zu integrieren, um bei Schwingerrohrbruch die Auswerteeinheit zu schützen. Die Verschlauchung bzw. der Flüssigkeitspfad kann über dieses Zusatzgehäuse über Anschlusstüllen oder Schlauchadapter zum Biegeschwinger mit Masseausgleich geführt werden. Idealerweise dient dieses Zusatzgehäuse auch als Standfuß, an dem das Gehäuse befestigt wird.

Die Kopplung zwischen der Kartusche und dem Messgerät kann über einen Flüssigkeitsverteiler erfolgen, der als Aufhängepunkt und Auflager dient und gegebenenfalls ebenfalls getauscht werden kann. Die beiden Schenkel des Schwingers, die für die Zu- und Ableitung der Probe zur Verfügung stehen, werden an den Flüssigkeitsverteiler gekoppelt bzw. dicht angeschlossen.

Die Befestigung des Sensors des Biegeschwingers mit Massenausgleich im Gehäuse ist derart gestaltet, dass er nur am Auflager befestigt ist und keine mechanische Berührung zur Gehäusewand zulässt. Damit werden eine Schwingungsbeeinflussung und eine mechanische Entkopplung gegen Umwelteinflüsse, z.B. Stöße oder Belastung der Kartusche, erreicht.

Die Befestigung der Kartusche am Messgerät ist vorteilhafterweise derart gestaltet, dass die Fluidanschlüsse des Biegeschwingers in der Messposition des Messgeräts schräg, z.B. 10°, nach oben weisen bzw. in der Standposition des Messgeräts, insbesondere direkt, nach oben gerichtet sind und somit Gasblasen, welche für die Dichtemessung störend sind, entweichen können. Die Verbindung wird durch Dichtungen am Biegeschwinger mit Massenausgleich oder am Flüssigkeitsverteiler abgedichtet. Die Zu-und Ableitung des Fluids erfolgt dabei prinzipiell mittels eines beliebigen Füllmechanismus. D.h. die Probe kann entweder manuell durch eine Handpumpe, aber auch elektrisch unterstützt durch eine Motorpumpe oder einen Linearantrieb zur Unterstützung der Handpumpe zugeführt werden. Die Handpumpe kann dabei beispielsweise mit einer federunterstützten Spritze realisiert werden, die gegen die Federkraft durch den Benutzer gespannt wird und dann automatisch die Probe mittels der Federkraft einsaugt. In einer einfachen Form, bevorzugt für hochviskose Flüssigkeiten, kann die Probe aus einer Spritze in den Biegeschwinger mit Massenausgleich geleitet werden. Die Probenentnahme durch Pumpen aus einem Reservoir ist ebenso möglich, wie eine Anordnung im Handgerät mit einer kontrollierten Entnahme mittels Spritze aus einem Probenbehälter.

Die Anschlüsse des jeweiligen Füllsystems können am Flüssigkeitsverteiler des Messgeräts vorgenommen werden.

Die Kartusche wird mittels Passstiften, Schnellverschluss, Schraubverschluss mit Überwurfmutter oder ähnlichen Vorrichtungen am Messgerät befestigt.

Die elektrischen Verbindungen werden jeweils separat über einen Steckkontakt hergestellt, oder die Steckkontakte sind bereits am Messgerät und der Kartusche so fixiert, dass der Kontakt durch passgenaues Einsetzen hergestellt wird.

Es ist auch eine elektrisch kontaktlose Kopplung zwischen der Kartusche und dem Messgerät möglich. Durch bekannte Vorgangsweisen, z.B. Transformator, Optokoppler, RFID, etc., können sowohl Energieversorgung als auch Datenkommunikation drahtlos erfolgen. Dadurch können das Problem der Flüssigkeitsabdichtung bzw. die Nachteile mechanischer Stecker aufgrund von Korrosion, Kontaktproblemen, usw. verhindert werden.

Die Kapselung des Biegeschwinger mit Massenausgleichs und der elektronischen Bauteile erfolgt in bevorzugter Weise mit bruchfestem Material. Dies kann im Falle von metallischen Schwingern beispielsweise einfach durch eine metallische Umhüllung erfolgen.

Bei Glasschwingern steht eine optische Kontrolle des Füllzustandes auf Blasen zur Verfügung. Diese Glasschwinger werden daher bevorzugt mit transparenten Materialien ummantelt. Dies kann Glas aber auch beispielsweise bruchsicheres Kunststoffmaterial sein, z.B. Polykarbonat.

Dabei kann zumindest ein Teil der Kartusche transparent ausgeführt sein bzw. kann die Kartusche ein Sichtfenster besitzen.

Die Kartusche kann mit einer Beleuchtung des Biegeschwinger mit Massenausgleich ausgestattet werden, die die optische Kontrolle der Füllgüte unterstützt. Dazu kann an der Rückseite des Schwingerrohrs, gegenüber dem Sichtfenster, eine Hintergrundbeleuchtung angebracht sein.

Gegebenenfalls ist eine reflektierende Folie zur Beobachtung des Füllzustandes hinter dem Schwinger angebracht. Die Kartusche kann in einem Teilabschnitt als Lupe ausgeführt werden, um die Sichtkontrolle zu erleichtern und verbessern.

In einer Ausführungsform kann das Gehäuse der Kartusche auch thermisch isoliert ausgeführt werden. Damit kann der Einfluss wechselnder Umgebungsbedingungen besonders bei Handmessgeräten minimiert werden. Die Isolierung stellt ein rascheres Erreichen von stabilen Messbedingungen sicher und kann in Kombination mit der Messung von zwei Temperaturwerten für das Gehäuse und den Schwinger kürzere Messzeiten aufgrund von Temperaturangleichsvorausberechnung, bedeuten.

Das Gehäuse enthält zumindest ein, vorzugsweise zwei Temperatursesore, beispielsweise NTC's, PTC's, Thermoelemente etc. um die Erreichung stabiler Temperaturverhältnisse im Gehäuse zu erfassen.
Damit kann sowohl die Temperatur des Schwingerrohrs mit der Befüllung durch das Fluid am Schwinger als auch die Temperatur im Innenraum der Kartusche gemessen werden. Damit lässt sich ein stabiler Messpunkt bei der Messung in einem Handmessgerät ohne Temperierung erreichen und die Temperatur der Probe zum Zeitpunkt der Messung aufnehmen. Durch Hinterlegung von Justiertabellen, gegebenenfalls Justierpolynomen, für die Temperaturabhängigkeit der Dichte unterschiedlicher Proben lässt sich die Dichte bei beliebigen Temperaturen ermitteln. Im Falle von Laborgeräten mit Temperierung der Probe kann so die Probentemperatur gegebenenfalls überprüft werden.

Die Justierdaten der verwendeten Temperaturmessung sowie die Justierkonstanten für die Auswertung der Dichte aus den Messsignalen des Biegeschwingers werden für jeden in eine Kartusche eingesetzten Biegeschwinger mit Massenausgleich werksseitig ermittelt und in der Kartusche zum Einbau in das bzw. zur Übergabe an das Messgerät zur Verfügung gestellt.

Im einfachsten Fall werden die Kartuschen mit einer eindeutigen Kennzeichnung, beispielsweise einer Nummer oder einem elektronisch lesbaren Code wie einem Barcode versehen. Die Justierdaten können aus einem beigefügten Datenblatt mit dieser Nummer dem Messgerät eingegeben werden und können dort mit dieser Nummer im Speicher zur Auswertung der Messdaten aufrufbar zur Verfügung stehen.

Die Justierdaten können dabei auch auf einem Datenträger / Speichermedium übermittelt werden und mit einem Lesegerät vom Messgerät kopiert bzw. ausgelegt werden. Die Justierdaten können auch vom Messgerät bspw. über eine Schnittstelle ausgelesen und elektronisch eingelesen werden.

In einer Ausführungsform kann die Kartusche vom Messgerät automatisch erkannt werden und die Justierdaten können werksseitig direkt auf einem nichtflüchtigen Speicher auf der Kartusche abgelegt werden. Dabei kann nach Alterung des Schwingers gegebenenfalls der Datensatz werkseitig durch zusätzliche Justiermessungen erneuert werden.

In einer Ausführungsform stehen die Justierdaten in einem nichtflüchtigen Speicher direkt in der Kartusche zur Verfügung und können dort beispielsweise mit einem bekannten One-Wire-Bus-System wie dem I-Button von Dallas über einen einzigen Kontakt direkt vom Messgerät ausgelesen werden und bei der Justierung auf diesem abgelegt werden.

In einer weiteren Ausführungsform können die Daten werksseitig auf ein RFID-TAG geschrieben und vom Messgerät mittels einem, gegebenenfalls berührungslosen, z.B. im Messgerät eingebauten, Reader ausgelesen werden.

Der Einbau der Kartusche kann mit einem zusätzlichen Freiheitsgrad zur Stoßdämpfung erfolgen, um die Wahrscheinlichkeit des Schwingerbruchs zu verringern und die Robustheit des gesamten Messgeräts zu erhöhen. Dazu kann die Verbindung zwischen dem Messgerät und der Kartusche durch Einsatz von federnden Elementen, z.B. Gummidichtungen, abgefedert werden.

Die Kartusche umschließt die in ihr angeordneten Bauteile vorteilhafterweise völlig bzw. zur Gänze.

## Patentansprüche

1. Verfahren zur Dichtemessung von fluiden Medien mit einem einen Dichtesensor aufweisenden Messgerät, **dadurch gekennzeichnet,**
- **dass** als Dichtesensor ein Biegeschwinger mit Massenausgleich (30) eingesetzt wird und alle für das Schwingungsverhalten, die Schwingungserregung und Schwingungsauswertung relevanten Bauteile des Biegeschwinger mit Massenausgleich (30) sowie die dem Biegeschwinger mit Massenausgleich (30) direkt zugeordnete Mess-und Sensorelektronik (23) mit einer Kartusche, insbesondere allseitig, umschlossen werden und/oder diese Bauteile (23) mit dem Biegeschwinger mit Massenausgleich (30) in die Kartusche (20) eingesetzt werden,
- **dass** der Biegeschwinger mit Massenausgleich (30) samt Kartusche (20) unter Einsatz von Messstandards justiert oder kalibriert und gegebenenfalls an den jeweiligen Einsatzzweck angepasst wird, und
- **dass** die Kartusche (20) mit dem Biegeschwinger mit Massenausgleich (30) vor Beginn des Messeinsatzes zur Untersuchung von Medien mit dem Messgerät (28) oder einem Grundkörper (29) des Messgerätes lösbar oder auswechselbar verbunden wird.

2. Verfahren nach Anspruch 1, **dadurch gekennzeichnet, dass** der Biegeschwinger mit Massenausgleich (30) freischwingend und frei von einer Gegenmasse in die Kartusche (20) eingesetzt wird und nur der das Schwingerrohr (10, 11, 12, 13) des Biegeschwingers mit Massenausgleich (30) haltende oder einspannende Träger (2, 3) mit der Kartusche (20) verbunden wird.

3. Verfahren nach Anspruch 1 oder 2, **dadurch gekennzeichnet, dass** die Justier-oder Kalibrierdaten auf ein in oder an der Kartusche (20) befindliches Speichermedium (22) abgespeichert und dort elektronisch lesbar zur Verfügung gehalten werden.

4. Verfahren nach einem der Ansprüche 1 bis 3, **dadurch gekennzeichnet, dass** im Zuge der Messung die Messdaten und die Justier- oder Kalibrierdaten von dem in der Kartusche (20) befindlichen Biegeschwinger mit Massenausgleich (30) oder der diesem zugeordneten Mess- und Sensorelektronik (23) an eine im Messgerät (28) befindliche Auswerteeinheit (50) übertragen werden und/oder
- dass im Zuge der Messung von der Mess- und Sensorelektronik (23) Steuersignale für die Phasenlage der Anregung des Schwingerrohrs (10, 11, 12, 13) des Biegeschwingers mit Massenausgleich (30) an die in der Kartusche (20) oder im Messgerät (28, 29) befindliche Steuereinheit (51) für die in der Kartusche (20) befindlichen Bauteile übertragen werden und/oder
- dass aus dem Abnahmesignal des Biegeschwingers mit Massenausgleich (30) generierte, elektrische, periodische Signale als charakteristische Signale für die Dichteauswertung von der in der Kartusche (20) befindlichen Mess- und Sensorelektronik (23) an das Messgerät (28, 29) und/oder die Steuer- und/oder Auswerteinheit (50, 51) übertragen werden und/oder
- dass Temperaturmesssignale betreffend die Umgebungstemperatur und/oder die Temperatur des Schwingerrohrs (10, 11, 12, 13) zur Kompensation der Temperatur der Dichtemessung und/oder zur Temperaturangleichung und/oder deren Vorausberechnung von der in der Kartusche (20) befindlichen Mess- und Sensorelektronik (23) an das Messgerät (28, 29) und/oder die Steuer- und/oder Auswerteinheit (50, 51) übertragen werden.

5. Messgerät zur Dichtemessung eines fluiden Mediums, wobei das Messgerät (28, 29) einen Dichtesensor umfasst, der als Biegeschwinger mit Massenausgleich (30) ausgebildet ist und im Messgerät eine Auswerteinheit (50) für die von Biegeschwinger mit Massenausgleich (30) abgegebene Messdaten vorgesehen ist, insbesondere zur Durchführung des Verfahrens nach einem der Ansprüche 1 bis 4, **dadurch gekennzeichnet,**
- **dass** der Biegeschwinger mit Massenausgleich (30) sowie dessen Mess- und Sensorelektronik (23) in eine Kartusche (20) eingesetzt und von dieser, insbesondere allseitig, umschlossen sind,
- **dass** die Kartusche (20) mit dem Messgerät (28, 29) über Verbindungsbauteile (29, 30) lösbar verbindbar oder verbunden ist, und
- **dass** von der Kartusche (20) zumindest ein Speichermedium (22), insbesondere allseitig, umschlossen oder dieses in der Kartusche (20) angeordnet ist, auf dem Justier- bzw. Kalibrierdaten des Biegeschwingers mit Massenausgleich (30), die für den Biegeschwinger mit Massenausgleich (30) unter Einsatz von Messstandards ermittelt wurden, abgespeichert vorliegen.

6. Messgerät nach Anspruch 5, **dadurch gekennzeichnet, dass** das Schwingerrohr (10, 11, 12, 13) des Biegeschwingers mit Massenausgleich (30) von einem Träger (23) getragen oder in diesen eingespannt ist, der mit der Kartusche (20) verbunden oder in dieser gelagert ist.

7. Messgerät nach Anspruch 5 oder 6, **dadurch gekennzeichnet, dass** die für das Schwingerverhalten relevanten Teile der Mess- und Auswerteelektronik (23, 50, 51) gemeinsam mit dem Biegeschwinger mit Massenausgleich (30) in der flüssigkeitsdichten und/oder teilweise durchsichtigen und/oder thermisch isolierenden Kartusche (20) angeordnet sind.

8. Messgerät nach einem der Ansprüche 5 bis 7, **dadurch gekennzeichnet,**
- **dass** die Kartusche (20) einen Verbindungsteil trägt, dem am Messgerät ein Gegenstück zugeordnet ist, mit denen die Kartusche (20) und das Messgerät (28, 29) lösbar miteinander verbunden sind, und/oder
- **dass** an der Kartusche (20) des Biegeschwingers mit Massenausgleich (30) und an dem Messgerät (28, 29) miteinander verbindbare Steck-, Schraub-, Klemm- oder Bajonettverschlüsse ausgebildet sind und/oder
- **dass** in der Kartusche (20) der Erregerverstärker sowie die Schwingungserreger und die Sensoren für die Abnahme der Schwingungsparameter, z.B. Magnete, Piezoelemente, elektrische Elemente, Temperatursensoren, Anregungseinheiten für den Anregewinkel und/oder Beleuchtungseinheiten zur optischen Kontrolle der Schwingungsrohrbefüllung, angeordnet sind, wobei diese Bauteile gegebenenfalls auf zumindest einer Leiterplatte angeordnet sind, die mit dem Biegeschwinger mit Massenausgleich (30) gemeinsam in der Kartusche (20) aufgenommen bzw. von dieser umschlossen sind.

9. Messgerät nach einem der Ansprüche 5 bis 8, **dadurch gekennzeichnet, dass** das Messgerät (28, 29) die Steuer- und Auswerteelektronik (50, 51), eine Tastatur, einen Bildschirm, die Spannungs- bzw. Stromversorgung und/oder Füllhilfen, beispielsweise in Form einer Spritze oder Pumpe oder eines Probensamplers umfasst und gegebenenfalls Speichermedien zur Aufzeichnung und zur Ausbildung von Schnittstellen und Ausgabeeinheiten für die Messdaten enthält und/oder
- dass in die Kartusche (20) zusätzlich zum Erregerverstärker die Auswerteeinheit (50), vorteilhafterweise in Form eines Microcontrollers, mit einer drahtgebundenen oder drahtlosen Schnittstelle integriert ist.

10. Messgerät nach einem der Ansprüche 5 bis 9, **dadurch gekennzeichnet, dass** am Messgerät (28, 29) ein Ausgangsrohr (26) bzw. Anschlussrohr (27) für die Zuleitung bzw. Ableitung eines Mediums zum bzw. vom Biegeschwinger mit Massenausgleich (30) ausgebildet ist, wobei an der Kartusche (20) angepasste Rohrstücke bzw. Aufnahmen zur mediumsdichten Verbindung der Kartusche (20) mit dem Messgerät (28, 29) ausgebildet sind.

11. Messgerät nach einem der Ansprüche 5 bis 10, **dadurch gekennzeichnet, dass** die Kartusche (20) einen Anschluss für das zu untersuchende Medium besitzt, welcher Anschluss in das Schwingerrohr (10, 11, 12, 13) des Biegeschwingers mit Massenausgleich (30) führt und/oder dass das Schwingerrohr (10, 11, 12, 13) des Biegeschwingers mit Massenausgleich (30) in Abstand zur Wand (21) der Kartusche (20) angeordnet ist und/oder dass die Kartusche (20) zweigeteilt ausgebildet ist und eine Abteilung aufweist, in der die Mess- und Sensorelektronik (23), gegebenenfalls durch eine Wand vom Biegeschwinger mit Massenausgleich (30) getrennt, angeordnet ist.

12. Messgerät nach einem der Ansprüche 5 bis 11, **dadurch gekennzeichnet, dass** der Biegeschwinger mit Masseausgleich (30) ein Doppelbiegeschwinger oder ein X-Schwinger ist.

13. Kartusche für ein Messgerät nach einem der Ansprüche 5 bis 12, **dadurch gekennzeichnet, dass** in der Kartusche (20) ein Biegeschwinger mit Massenausgleich (30) sowie dessen Mess- und Sensorelektronik (23) und zumindest ein Speichermedium (22) angeordnet bzw. von dieser gänzlich umschlossen sind, auf dem Justier- bzw. Kalibrierdaten des Biegeschwingers mit Massenausgleich (30), die für den Biegeschwinger mit Massenausgleich (30) unter Einsatz von Messstandards ermittelt wurden, abgespeichert vorliegen, wobei das Schwingerrohr (10, 11, 12, 13) des Biegeschwingers mit Massenausgleich (30) vorzugsweise von einem Träger (23) getragen oder in diesen eingespannt ist, der mit der Kartusche (20) verbunden oder in dieser gelagert ist.

14. Kartusche nach Anspruch 13, **dadurch gekennzeichnet, dass** die für das Schwingerverhalten relevanten Teile der Mess- und Auswerteelektronik (23) gemeinsam mit dem Biegeschwinger mit Massenausgleich (30) in der flüssigkeitsdichten und/oder teilweise durchsichtigen und/oder thermisch isolierenden Kartusche (20) angeordnet sind, wobei die Kartusche einen Verbindungs- bzw. Anschließteil (25) trägt und/oder dass in der Kartusche (20) der Erregerverstärker sowie die Schwingungserreger und die Sensoren für die Abnahme der Schwingungsparameter, z.B. Magnete, Piezoelemente, elektrische Elemente, Temperatursensoren, Anregungseinheiten für den Anregewinkel und/oder Beleuchtungseinheiten zur optischen Kontrolle der Schwingungsrohrbefüllung, angeordnet sind, wobei diese Bauteile gegebenenfalls auf zumindest einer Leiterplatte angeordnet sind, die mit dem Biegeschwinger mit Massenausgleich (30) gemeinsam in der Kartusche (20) aufgenommen sind.

15. Kartusche nach Anspruch 13 oder 14, **dadurch gekennzeichnet, dass** in die Kartusche (20) zusätzlich zum Erregerverstärker die Auswerteeinheit (50), vorteilhafterweise in Form eines Microcontrollers, mit einer drahtgebundenen oder drahtlosen Schnittstelle integriert ist und/oder dass die Kartusche (20) einen Anschluss für das zu untersuchende Medium besitzt, welcher Anschluss in das Schwingerrohr (10, 11, 12, 13) des Biegeschwingers mit Massenausgleich (30) führt und/oder dass das Schwingerrohr (10, 11, 12, 13) des Biegeschwingers mit Massenausgleich (30) in Abstand zur Wand (21) der Kartusche (20) angeordnet ist und/oder dass die Kartusche (20) zweigeteilt ausgebildet ist und eine Abteilung aufweist, in der die Mess- und Sensorelektronik (23), gegebenenfalls durch eine Wand vom Biegeschwinger mit Massenausgleich (30) getrennt, angeordnet ist.

## Claims

1. Method for the density measurement of fluid media with a measuring device comprising a density sensor,
**characterized in that**
- a flexural resonator with mass balancing (30) is used as the density sensor, while all the relevant components of the flexural resonator with mass balancing (30) for the vibration behavior, vibration generation and vibration evaluation, as well as the measuring and sensor electronics (23) directly assigned to the flexural resonator with mass balancing (30), are enclosed in a cartridge, in particular on all sides, and/or these components (23) are inserted into the cartridge (20) with the flexural resonator with mass balancing (30),
- the flexural resonator with mass balancing (30) together with the cartridge (20) is adjusted or calibrated using measurement standards and, if appropriate, adapted to the particular application, and
- the cartridge (20) is detachably or interchangeably connected with the flexural resonator with mass balancing (30) before the beginning of the measuring insert for the examination of media with the measuring device (28) or a base body (29) of the measuring device.

2. Method according to claim 1,
**characterized in that**
the flexural resonator with mass balancing (30) is inserted into the cartridge (20) free-floating and with no counter mass, and only the carrier (2, 3) holding or clamping the resonator tube (10, 11, 12, 13) of the flexural resonator with mass balancing (30) is connected to the cartridge (20).

3. Method according to claim 1 or 2,
**characterized in that**
the adjustment or calibration data is stored in a storage medium (22) located in or on the cartridge (20) and is held electronically readable there.

4. Method according to one of the claims 1 to 3,
**characterized in that**
- the measurement data and the adjustment or calibration data from the flexural resonator with mass balancing (30) located in the cartridge (20) or the measuring and sensor electronics (23) assigned therewith, and which are measured in the course of the measurement are transmitted to an evaluation unit (50) located in the measuring device (28), and/or
- in the course of the measurement of the measuring and sensor electronics (23), control signals for the phase position of the excitation of the resonator tube (10, 11, 12, 13) of the flexural resonator with mass balancing (30) are transmitted to the control unit (51) located in the cartridge (20) or in the measuring device (28, 29) for the components located in the cartridge (20), and/or
- electrical periodic signals generated from the sampling signal of the flexural resonator with mass balancing (30) as characteristic signals for the density evaluation from the measuring and sensor electronics (23) located in the cartridge (20) are transmitted to the measuring device (28, 29) and/or the control and/or evaluation unit (50, 51), and/or
- temperature measuring signals related to the ambient temperature and/or the temperature of the resonator tube (10, 11, 12, 13) for compensation of the temperature of the density measurement and/or for the temperature equalization and/or the advance calculation from the measuring and sensor electronics (23) located in the cartridge (20), are transmitted to the measuring device (28, 29) and/or the control and/or evaluation unit (50, 51).

5. Measuring device for the density measurement of a fluid medium, wherein the measuring device (28, 29) comprises a density sensor in the form of a flexural resonator with mass balancing (30), and wherein an evaluation unit (50) is provided in the measuring device for the measuring data output from the flexural resonator with mass balancing (30), in particular for carrying out the method according to one of the claims 1 to 4,
**characterized in that**
- the flexural resonator with mass balancing (30) as well as its measuring and sensor electronics (23) is inserted into a cartridge (20) and is surrounded by the latter, in particular on all sides,
- the cartridge (20) is detachably connectable or connected to the measuring device (28, 29) via connecting components (29, 30), and
- at least one storage medium (22) is enclosed by the cartridge (20), in particular on all sides, or is arranged in the cartridge (20), and on which are stored the adjustment and calibration data of the flexural resonator with mass balancing (30) which have been determined for the flexural resonator with mass balancing (30) using measurement standards.

6. Measuring device according to claim 5,
**characterized in that**
the resonator tube (10, 11, 12, 13) of the flexural resonator with mass balancing (30) is supported by or clamped in a carrier (23) which is connected to or housed in the cartridge (20).

7. Measuring device according to claim 5 or 6,
**characterized in that**
the parts of the measuring and evaluation electronics (23, 50, 51), which are relevant for the vibration behavior, together with the flexural resonator with mass balancing (30), are arranged in the fluid-tight and/or partially transparent and/or thermally insulating cartridge (20).

8. Measuring device according to one of the claims 5 to 7,
**characterized in that**
- the cartridge (20) carries a connecting part which is associated with a counterpart on the measuring device (28, 29), and by means of which the cartridge (20) and the measuring device (28, 29) are detachably connected to each other, and/or
- plug-in, screw, clamp or bayonet closures which may be connected to one another are formed on the cartridge (20) of the flexural resonator with mass balancing (30) and on the measuring device (28, 29), and/or
- the excitation amplifier as well as the vibration exciters and the sensors for the sensing of the vibration parameters, e.g. magnetic, piezo-electric, electrical elements, temperature sensors, excitation units for the excitation angle, and/or illumination units for optical control of the resonator tube filling are arranged in the cartridge (20), wherein these components (30) may be arranged on at least one printed circuit board with which the flexural resonator with mass balancing (30) is housed in the cartridge (20), or are enclosed by the latter.

9. Measuring device according to one of the claims 5 to 8,
**characterized in that**
- the measuring device (28, 29) comprises the control and evaluation electronics (50, 51), a keyboard, a screen, the voltage and current supply and/or filling aids, for example in the form of a syringe or pump or a sampling device and, if appropriate, storage media for recording and forming interfaces and output units for the measurement data, and/or
- in addition to the excitation amplifier, the evaluation unit (50), advantageously in the form of a microcontroller with a wired or wireless interface, is integrated into the cartridge (20).

10. Measuring device according to one of the claims 5 to 9,
**characterized in that**
an output pipe (26) or connection pipe (27) is provided on the measuring device (28, 29) for the supply or discharge of a medium to or from the flexural resonator with mass balancing (30), wherein tube sections or receptacles adapted for the fluid-tight connection of the cartridge (20) with the measuring device (28, 29) are formed on the cartridge (20).

11. Measuring device according to one of the claims 5 to 10,
**characterized in that**
the cartridge (20) has a connection for the medium to be examined, which connection leads to the vibration tube (10, 11, 12, 13) of the flexural resonator with mass balancing (30), and/or the vibration tube (10, 11, 12, 13) of the flexural resonator with mass balancing (30) is arranged at a distance from the wall (21) of the cartridge (20) and/or the cartridge (20) is formed in two parts and has a section in which the measuring and sensor electronics (23) are arranged, if appropriate separated by a wall from the flexural resonator with mass balancing (30).

12. Measuring device according to one of the claims 5 to 11,
**characterized in that**
the flexural resonator with mass balancing (30) is a double- flexural resonator or an X oscillator.

13. Cartridge for a measuring device according to one of the claims 5 to 12,
**characterized in that**
a flexural resonator with mass balancing (30) as well as its measuring and sensor electronics (23) and at least one storage medium (22) are arranged in the cartridge (20) or are completely enclosed by it, and on which are stored adjustment and calibration data of the flexural resonator with mass balancing (30) which are determined using measurement standards, wherein the vibration tube (10, 11, 12, 13) of the flexural resonator with mass balancing (30) is preferably carried by or clamped in a carrier (23) which is connected to or housed in the cartridge (20).

14. Cartridge according to claim 13,
**characterized in that**
the parts of the measuring and evaluation electronics (23) which are relevant for the vibration behavior are used together with the flexural resonator with mass balancing (30) in the fluid-tight and/or partially transparent and/or thermally insulating cartridge (20), wherein the cartridge carries a connecting part (25) and/or wherein the excitation amplifier as well as the vibration exciters and the sensors for the sensing of the vibration parameters, e.g. magnetic, piezo-electric, electrical elements, temperature sensors, excitation units for the excitation angle, and/or illumination units for optical control of the resonator tube filling, are arranged in the cartridge (20), wherein these components (30) may be arranged on at least one printed circuit board with which the flexural resonator with mass balancing (30) is housed in the cartridge (20), or are enclosed by the latter.

15. Cartridge according to claim 13 or 14,
**characterized in that**
in addition to the excitation amplifier, the evaluation unit (50), advantageously in the form of a microcontroller, is integrated into the cartridge (20) with a wired or wireless interface and/or the cartridge (20) has a connection for the medium to be examined, which connection leads into the vibration tube (10, 11, 12, 13) of the flexural resonator with mass balancing (30), and/or the vibration tube (10, 11, 12, 13) of the flexural resonator with mass balancing (30) is arranged at a distance from the wall of the cartridge (20), and/or the cartridge (20) is formed in two parts and has a section in which the measuring and sensor electronics (23), if necessary separated by a wall of the flexural resonator with mass balancing (30), are arranged.

## Revendications

1. Procédé de mesure de densité de milieux fluides avec un appareil de mesure comprenant un capteur de densité, **caractérisé en ce que**
- en tant que capteur de densité, un résonateur de flexion avec équilibrage de masse (30) est utilisé et tous les composants du résonateur de flexion avec équilibrage de masse (30) importants pour le comportement vibratoire, l'excitation vibratoire et l'évaluation des vibrations ainsi que l'électronique de mesure et de capteur (23) concernant directement le résonateur de flexion avec équilibrage de masse (30) sont entourés, plus particulièrement de tous les côtés, d'une cartouche et/ou ces composants (23) sont insérés dans la cartouche (20) avec le résonateur de flexion avec équilibrage de masse (30),
- le résonateur de flexion avec équilibrage de masse (30) avec la cartouche (20) est ajusté ou étalonné à l'aide de standards de mesure et le cas échéant adapté à l'application correspondante et
- la cartouche (20) avec le résonateur de flexion avec équilibrage de masse (30) est relié de manière amovible ou interchangeable avant le début de l'intervention de mesure pour l'examen de milieux avec l'appareil de mesure (28) ou un corps de base (29) de l'appareil de mesure.

2. Procédé selon la revendication 1, **caractérisé en ce que** le résonateur de flexion avec équilibrage de masse (30) est inséré de façon à osciller librement et libre d'une contre-masse, dans une cartouche (20) et seul le support (2, 3) maintenant ou enserrant le tube résonateur (10, 11, 12, 13) du résonateur de flexion avec équilibrage de masse (30) est relié avec la cartouche (20).

3. Procédé selon la revendication 1 ou 2, **caractérisé en ce que** les données d'ajustement ou de calibrage sont enregistrées sur un support de mémoire (22) se trouvant dans ou sur la cartouche (20) et y sont mises à disposition de manière à être lisibles électroniquement.

4. Procédé selon l'une des revendications 1 à 3, **caractérisé en ce que**, au cours de la mesure, les données de mesure et les données d'ajustement ou de calibrage sont transmises par le résonateur de flexion avec équilibrage de masse (30) se trouvant dans la cartouche (20) ou par l'électronique de mesure et de capteur (23) correspondant à celui-ci à une unité d'analyse (50) se trouvant dans l'appareil de mesure (28) et/ou
- au cours de la mesure, l'électronique de mesure et de capteur (23) transmet des signaux de commande pour la position en phase de l'excitation du tube résonateur (10, 11, 12, 13) du résonateur de flexion avec équilibrage de masse (30) à l'unité de commande (51) se trouvant dans la cartouche (20) ou dans l'appareil de mesure (28, 29), pour les composants se trouvant dans la cartouche (20) et/ou
- à partir du signal de prélèvement du résonateur de flexion avec équilibrage de masse (30), les signaux électriques périodiques générés sont transmis en tant que signaux caractéristiques pour l'évaluation de la densité par l'électronique de mesure et de capteur (23) se trouvant dans la cartouche (20) à l'appareil de mesure (28, 29) et/ou à l'unité de commande et/ou d'analyse (50, 51) et/ou
- des signaux de mesure de température concernant la température ambiante et/ou la température du tube résonateur (10, 11, 12, 13) sont transmis, pour la compensation de la température de la mesure de densité et/ou pour l'équilibrage de température et/ou de son calcul préalable par l'électronique de mesure et de capteur (23) se trouvant dans la cartouche (20), à l'appareil de mesure (28, 29) et/ou à l'unité de commande et/ou d'analyse (50, 51).

5. Appareil de mesure pour la mesure de densité d'un milieu fluide, l'appareil de mesure (28, 29) comprenant un capteur de densité qui est conçu comme un résonateur de flexion avec équilibrage de masse (30) et, dans l'appareil de mesure est prévue une unité d'analyse (50) pour les données de mesure émises par le résonateur de flexion avec équilibrage de masse (30), plus particulièrement pour l'exécution du procédé selon l'une des revendications 1 à 4, **caractérisé en ce que**
- le résonateur de flexion avec équilibrage de masse (30) ainsi que son électronique de mesure et de capteur (23) sont insérés dans une cartouche (20) et entourés par celle-ci, plus particulièrement de tous côtés,
- la cartouche (20) peut être reliée ou est reliée avec l'appareil de mesure (28, 29) de manière amovible par l'intermédiaire de composants de liaison (29, 30) et
- la cartouche (20) entoure, plus particulièrement de tous côtés, au moins un support d'enregistrement (22) ou bien celui-ci est disposé dans la cartouche (20), sur lequel les données d'ajustement et de calibrage du résonateur de flexion avec équilibrage de masse (30), qui ont été déterminées pour le résonateur de flexion avec équilibrage de masse (30) à l'aide de standards de mesure, sont enregistrées.

6. Appareil de mesure selon la revendication 5, **caractérisé en ce que** le tube résonateur (10, 11, 12, 13) du résonateur de flexion avec équilibrage de masse (30) est porté par un support (23) ou enserré dans celui-ci, qui est relié avec la cartouche (20) ou logé dans celle-ci.

7. Appareil de mesure selon la revendication 5 ou 6, **caractérisé en ce que** les parties importantes pour le comportement oscillatoire de l'électronique de mesure et d'analyse (23, 50, 51) sont disposées conjointement avec le résonateur de flexion avec équilibrage de masse (30) dans la cartouche (20) étanche aux fluides et/ou partiellement transparente et/ou thermiquement isolante.

8. Appareil de mesure selon l'une des revendications 5 à 7, **caractérisé en ce que**
- la cartouche (20) porte une partie de liaison à laquelle correspond, sur l'appareil, une contre-partie, avec lesquelles la cartouche (20) et l'appareil de mesure (28, 29) sont reliés de manière amovible entre eux et/ou
- sur la cartouche (20) du résonateur de flexion avec équilibrage de masse (30) et sur l'appareil de mesure (28, 29), se trouvent des fermetures à fiches, à vis, à serrage ou à baïonnettes pouvant être reliées entre elles et/ou
- dans la cartouche (20), l'amplificateur excitateur ainsi que l'excitateur d'oscillation et les capteurs pour le prélèvement des paramètres d'oscillation, par exemple des aimants, des éléments piézo-électriques, des éléments électriques, des capteurs de température, des unités d'excitation pour l'angle d'excitation et/ou des unités d'éclairage pour le contrôle optique du remplissage du tube résonateur, sont disposés, ces composants étant le cas échéant disposés sur au moins un circuit imprimé, qui sont logés conjointement avec le résonateur de flexion avec équilibrage de masse (30) dans la cartouche (20) ou entourés par celle-ci.

9. Appareil de mesure selon l'une des revendications 5 à 8, **caractérisé en ce que** l'appareil de mesure (28, 29) comprend l'électronique de commande et d'analyse (50, 51), un clavier, un écran, l'alimentation en tension ou en courant et/ou des aides au remplissage, par exemple sous la forme d'une seringue ou d'une pompe ou d'un échantillonneur et, le cas échéant, contient des supports d'enregistrement pour l'enregistrement et pour la formation d'interfaces et d'unités d'émission pour les données de mesure et/ou
- dans la cartouche (20), en plus de l'amplificateur excitateur, est intégrée l'unité d'analyse (50), de manière avantageuse sous la forme d'un micro-contrôleur, avec une interface filaire ou sans fil.

10. Appareil de mesure selon l'une des revendications 5 à 9, **caractérisé en ce que**, sur l'appareil de mesure (28, 29), se trouve un tube de sortie (26) ou un tube de raccordement (27) pour l'introduction ou l'évacuation d'un fluide dans ou hors du résonateur de flexion avec équilibrage de masse (30), moyennant quoi, sur la cartouche (20), se trouvent des éléments tubulaires ou des logements pour la liaison étanche aux fluides de la cartouche (20) avec l'appareil de mesure (28, 29).

11. Appareil de mesure selon l'une des revendications 5 à 10, **caractérisé en ce que** la cartouche (20) comprend un raccord pour le fluide à examiner, ce raccord conduisant dans le tube résonateur (10, 11, 12, 13) du résonateur de flexion avec équilibrage de masse (30) et/ou **en ce que** le tube résonateur (10, 11, 12, 13) du résonateur de flexion avec équilibrage de masse (30) est disposé à une certaine distance de la paroi (21) de la cartouche (20) et/ou **en ce que** la cartouche (20) est conçue en deux parties et comprend une section dans laquelle l'électronique de mesure et de capteur (23), est disposée, le cas échéant, de manière séparée par une paroi du résonateur de flexion avec équilibrage de masse (30).

12. Appareil de mesure selon l'une des revendications 5 à 11, **caractérisé en ce que** le résonateur de flexion avec équilibrage de masse (30) est double résonateur de flexion ou un résonateur X.

13. Cartouche pour un appareil de mesure selon l'une des revendications 5 à 12, **caractérisée en ce que**, dans la cartouche (20), sont disposés ou sont entièrement entourés par celle-ci un résonateur de flexion avec équilibrage de masse (30) ainsi que son électronique de mesure et de capteur (23) et au moins un support d'enregistrement (22), sur lequel les données d'ajustement ou de calibrage du résonateur de flexion avec équilibrage de masse (30) ont été déterminées à l'aide de standards de mesure, sont enregistrées, le tube résonateur (10, 11, 12, 13) du résonateur de flexion avec équilibrage de masse (30) étant supporté de préférence par un support (23) ou enserré dans celui-ci, qui est relié avec la cartouche (20) ou logé dans celle-ci.

14. Cartouche selon la revendication 13, **caractérisée en ce que** les parties importantes pour le comportement oscillatoire de l'électronique de mesure et d'analyse (23) sont disposées conjointement avec le résonateur de flexion avec équilibrage de masse (30) dans la cartouche étanche aux liquides et/ou partiellement transparente et/ou thermiquement isolante, la cartouche comprenant une partie de liaison ou de raccordement (25) et/ou **en ce que**, dans la cartouche (20), l'amplificateur excitateur ainsi que l'excitateur d'oscillation et les capteurs pour le prélèvement des paramètres d'oscillation, par exemple des aimants, des éléments piézo-électriques, des éléments électriques, des capteurs de température, des unités d'excitation pour l'angle d'excitation et/ou des unités d'éclairage pour le contrôle optique du remplissage du tube résonateur, sont disposés, ces composants étant le cas échéant disposés sur au moins un circuit imprimé, qui sont logés conjointement avec le résonateur de flexion avec équilibrage de masse (30) dans la cartouche (20).

15. Cartouche selon la revendication 13 ou 14, **caractérisée en ce que**, dans la cartouche (20), en plus de l'amplificateur excitateur, est intégrée l'unité d'analyse (50), de manière avantageuse sous la forme d'un micro-contrôleur, avec une interface filaire ou sans fil et/ou **en ce que** la cartouche (20) comprend un raccord pour le fluide à examiner, ce raccord conduisant dans le tube résonateur (10, 11, 12, 13) du résonateur de flexion avec équilibrage de masse (30) et/ou **en ce que** le tube résonateur (10, 11, 12, 13) du résonateur de flexion avec équilibrage de masse (30) est disposé à une certaine distance de la paroi (21) de la cartouche (20) et/ou **en ce que** la cartouche (20) est conçue en deux parties et comprend une section dans laquelle l'électronique de mesure et de capteur (23) est disposée de manière séparée du résonateur de flexion avec équilibrage de masse (30) le cas échéant par une paroi.
